# EUROPEAN PATENT APPLICATION

(11) **EP 3 299 683 A1**
(43) Date of publication of application: **28.03.2018**
(21) Application number: 16799881.4
(22) Date of filing: 18.05.2016
(51) Int. Cl.: F16J 15/3232, F16C 33/78

(54) **SEALING DEVICE**

(30) Priority: 22.05.2015 JP 2015104428; 22.05.2015 JP 2015104429; 01.09.2015 JP 2015172056
(71) Applicant: NOK Corporation, Tokyo 105-8585 (JP)
(72) Inventor: YAMANE Shohei, Fukushima-shi Fukushima 960-1102 (JP); SASAKI Kei, Fukushima-shi Fukushima 960-1102 (JP); SHUTO Yuichi, Fukushima-shi Fukushima 960-1102 (JP); KATO Takuya, Fukushima-shi Fukushima 960-1102 (JP)
(74) Representative: TBK
(86) International application number: PCT/JP2016/064674
(87) International publication number: WO 2016/190175

(57) **Abstract**

The purpose of the present invention is to provide a sealing device with a structure from which grease, which has been coated on the inner circumferential surface of an end face lip, does not tend to be scattered even if a centrifugal force acts on the sealing device. The present invention provides a sealing device for sealing foreign matter that is outside of a machine so that the foreign matter does not penetrate into the machine, the sealing device having an end face lip that slidably contacts an end face of a rotating-side part and lubricating grease that is coated on the inner circumferential surface of the lip. In the sealing device, the amount of grease coated on the distal edge of the lip is set to be less than the amount of grease coated on the lip base. Grease is coated over the entire inner circumferential surface of the lip and the thickness of the grease coated on the distal edge of the lip is set to be smaller than the thickness of the grease coated on the lip base. Also, grease is coated on a portion of the circumference of the inner circumferential surface of the lip and the coating thickness and/or the circumferential direction coating width of the grease coated on the distal edge of the lip is set to be smaller than the coating thickness or circumferential direction width of the grease coated on the lip base.

## Description

### BACKGROUND OF THE INVENTION

### Field of the Invention

The present invention relates to a sealing device according to a sealing technique. The sealing device according to the present invention is used, for example, as a hub bearing seal for a vehicle such as a motor vehicle, or is used as the other bearing seals.

### Description of the Conventional Art

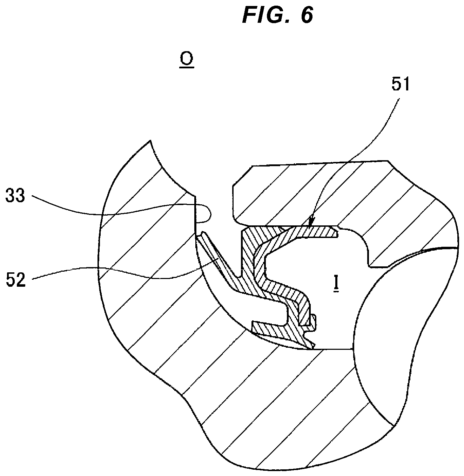

A sealing device 51 shown in Fig. 6 has been conventionally known as a sealing device which is used in a hub bearing portion in a vehicle such as a motor vehicle. The sealing device 51 mainly fulfills a function of sealing a foreign material (muddy water, not shown) in a bearing outer portion O so as to prevent the foreign material from entering into a bearing inner portion I, and is accordingly provided with an end face lip 52 which slidably comes into contact with an end face portion 33 of a bearing rotation side part (refer to patent document 1).

### PRIOR ART DOCUMENT

### Patent Document

Patent Document 1: Japanese Unexamined Patent Publication No. 2009-180366

### SUMMARY OF THE INVENTION

### Problem to be Solved by the Invention

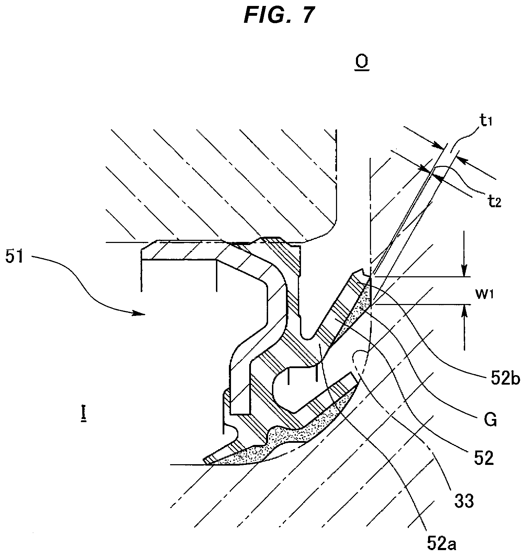

In the sealing device 51 in Fig. 6 mentioned above, a muddy water resistance is necessary for sealing the muddy water as mentioned above, and grease G may be accordingly applied to an inner peripheral surface of the end face lip 52 as shown in Fig. 7.

However, in the sealing device 51 in Fig. 7 mentioned above, the grease G is applied to an inner peripheral surface of a leading end portion 52b in the end face lip 52 at a comparatively large amount, and is applied to an inner peripheral surface of a root portion 52a in the end face lip 52 at a comparatively small amount as shown. More specifically, since an application thickness t1 of the grease G applied to the inner peripheral surface of the lip leading end portion 52b in the end face lip 52 is set to be thicker (larger) than an application thickness t2 of the grease G applied to the inner peripheral surface of the lip root portion 52a (t1 > t2), the applied grease G has a great contact width w1 at which the grease comes into contact with the end face portion 33 of the rotation side part.

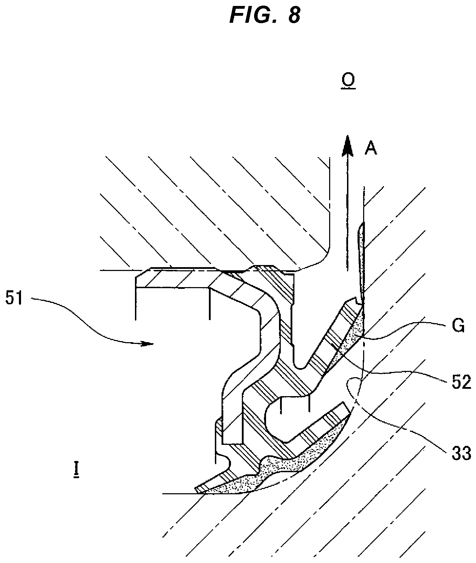

Therefore, in the case that the rotation side part rotates at a high speed in a state in which the contact width w1 is great as mentioned above, the grease G passes through the sliding portion of the end face lip 52 due to a centrifugal force as shown in Fig. 8, and there is fear that the grease is scattered toward a peripheral structure including a brake disk (a grease scattering direction is indicated by an arrow A). Since the attachment of the scattered grease G to the brake disc directly affects a brake performance, it is necessary to avoid the attachment of the grease G as much as possible.

The present invention is made by taking the above points into consideration, and an object of the present invention is to provide a sealing device structured such that a grease applied to an inner peripheral surface of an end face lip is hard to be scattered even in the case that a centrifugal force acts on the sealing device.

### Means for Solving the Problem

In order to achieve the above object, the present invention employs the following means.

A sealing device according to the present invention is a sealing device sealing a foreign material in a machine outer side so as to prevent the foreign material from entering into a machine inner side, having an end face lip which slidably comes into contact with an end face portion of a rotation side part, and applying grease for lubrication to an inner peripheral surface of the end face lip, wherein an application amount of the grease applied to an inner peripheral surface of a leading end portion in the end face lip is set to be smaller than an application amount of the grease applied to an inner peripheral surface of a root portion in the end face lip (claim 1).

In the case that the application amount of the grease applied to the inner peripheral surface of the leading end portion in the end face lip is set to be smaller than the application amount of the grease applied to the inner peripheral surface of the root portion in the end face lip, a contact width of the applied grease coming into contact with the end face portion of the rotation side part becomes smaller in comparison with the conventional one. Accordingly, the applied grease is hard to be affected by the centrifugal force. As a result, it is possible to inhibit the grease from passing through the sliding portion of the end face lip and being scattered.

In order to set the application amount of the grease applied to the inner peripheral surface of the leading end portion in the end face lip to be smaller than the application amount of the grease applied to the inner peripheral surface of the root portion in the end face lip, the following aspects can be, for example, conceived.

The grease is applied over a whole peripheral of the inner peripheral surface in the end face lip, and an application thickness of the grease applied to the inner peripheral surface of the leading end portion in the end face is set to be smaller than an application thickness of the grease applied to the inner peripheral surface of the root portion in the end face lip on the assumption thereof (claim 2).

Further, the grease is applied to a part of a circumference of the inner peripheral surface of the end face lip, and any one or both of an application thickness and an application width in a circumferential direction of the grease applied to the inner peripheral surface of the leading end portion in the end face lip is set to be smaller than an application thickness or an application width in a circumferential direction of the grease applied to the inner peripheral surface of the root portion in the end face lip on the assumption thereof (claim 3).

Further, it is effective in the present invention that grease trap is provided in an outer peripheral side of the end face lip in preparation for the case that the grease passes through the sliding portion of the end face lip. Since the grease trap collects the grease in the case that the grease trap is provided in the outer peripheral side of the end face lip as mentioned above, it is possible to inhibit the grease from being scattered (claim 4).

Since the sealing device according to the present invention exerts an effect of preventing the grease from being scattered, the sealing device is suitably used as a hub bearing seal for a vehicle such as a motor vehicle and the other bearing seals which are provided with a structure applying the grease to an inner peripheral surface of an end face lip (claim 5).

### Effect of the Invention

According to the present invention, since the application condition of the grease is set to be different from the conventional one, and the grease trap is provided, it is possible to provide the sealing device structured such that the grease applied to the inner peripheral surface of the end face lip is hard to be scattered even in the case that the centrifugal force acts on the sealing device.

### BRIEF EXPLANATION OF THE DRAWINGS

Fig. 1 is a cross sectional view of a substantial part of a sealing device according to a first embodiment of the present invention;
Figs. 2A and 2B are cross sectional views of a substantial part of a sealing device according to a modified embodiment of the first embodiment of the present invention;
Fig. 3 is a cross sectional view of a substantial part of a sealing device according to a second embodiment of the present invention;
Fig. 4 is a cross sectional view of a substantial part of a sealing device according to a third embodiment of the present invention;
Fig. 5 is a cross sectional view of a substantial part of a sealing device according to a fourth embodiment of the present invention;
Fig. 6 is a cross sectional view of a substantial part of a sealing device according to a conventional example;
Fig. 7 is a cross sectional view of a substantial part of a sealing device according to the other conventional example; and
Fig. 8 is a cross sectional view of a substantial part and shows a state in which a grease is scattered in the sealing device.

### DETAILED DESCRIPTION OF PREFERRED EMBODIMENTS

The following embodiments are included in the present invention.
(1) In order to prevent the grease from being scattered to a peripheral structure, the hub seal having the following specification is proposed.
(2) Application amount distribution of grease
   (2-1) An application amount distribution of the grease applied to the side lip is set to the following specification. More specifically, the grease application amount is set to be comparatively smaller toward the lip leading end from the vicinity of the lip root, thereby achieving the specification that at the on-shaft time the applied grease (except the lip leading end portion) does not come into contact with a bearing inner ring.
   (2-2) Grease application aspect is provided so that the grease does not come into contact with the bearing inner ring while keeping the grease lubrication in the lip leading end portion and maintaining the muddy water resistance on the basis of the above structure, thereby achieving the specification that the grease is hard to be scattered to the outer peripheral side of the seal.

### Embodiments

Next, a description will be given of embodiments according to the present invention with reference to the accompanying drawings.

### First embodiment

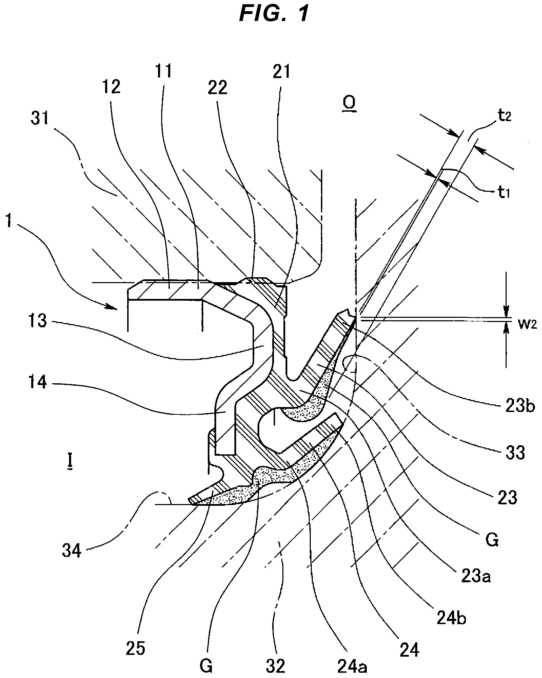

Fig. 1 shows a cross section of a substantial part of a sealing device 1 according to a first embodiment of the present invention. The sealing device 1 according to the embodiment is used as a hub bearing seal (a hub seal) in a bearing portion in a wheel suspension device for a motor vehicle, and is structured as follows.

More specifically, the sealing device is provided with a mounting ring 11 which is fixed to an inner peripheral surface of a housing 31 such as a bearing outer ring corresponding to a stationary side mounting part in the bearing portion and is made of a rigid material such as a metal, and a rubber-like elastic body 21 made of a predetermined rubber material is attached (crosslinking bonded) to the mounting ring 11.

The mounting ring 11 has a tubular portion 12 which is fitted and attached to an inner peripheral surface of the housing 31, and a radially inward flange portion 14 is integrally formed in an end portion in one side (a right side in the drawing) in an axial direction of the tubular portion 12 via a bent portion 13.

The rubber-like elastic body 21 is attached to the bent portion 13 and the flange portion 14 in the mounting ring 11, and an outer peripheral seal portion 22, an end face lip (a side lip) 23, a second end face lip (a second side lip) 24 and a radial lip (a grease lip) 25 are integrally formed by the rubber-like elastic body 21. The outer peripheral seal portion 22 comes into contact with an inner peripheral surface of the housing 31 in a stationary manner. The end face lip 23 slidably comes into contact with an end face portion (an end face portion in an axial direction) 33 of a shaft 32 such as a bearing inner ring corresponding to a rotation side part in the bearing portion. The second end face lip 24 slidably comes into contact with the end face portion 33 of the shaft 32 in the same manner in an inner peripheral side of the end face lip 23. The radial lip 25 slidably comes into contact with an outer peripheral surface portion 34 of the shaft 32 in a bearing inner portion (a machine inner side) I side of the second end face lip 24. A round portion having a circular arc cross sectional shape is included in the end face portion 33 as shown in the drawing.

The end face lip 23 and the second end face lip 24 are respectively formed so that diameters thereof are enlarged little by little from lip root portions 23a and 24a toward lip leading end portions 23b and 24b, are provided with the lip leading end portions 23b and 24b so as to be directed to an outer peripheral side, and mainly exert a sealing function so as to prevent a foreign material such as muddy water in a bearing outer portion (a machine outer side) O from entering into the machine inner side I on the basis of the lip leading end portions 23b and 24b slidably coming into contact with the end face portion 33 of the shaft 32.

Grease G constructed by fluid having viscosity is applied to each of the inner peripheral surfaces of the lips 23, 24 and 25, for enhancing a muddy water resistance of the lips 23, 24 and 25 and further enhancing a sliding resistance thereof.

Among them, the grease G applied to the inner peripheral surface of the end face lip 23 is set to be applied to an inner peripheral surface of a leading end portion 23b in the end face lip 23 at a comparatively small amount and be applied to an inner peripheral surface of a root portion 23a in the end face lip 23 at a comparatively large amount. More specifically, the grease G is applied over a whole periphery of the inner peripheral surface of the end face lip 23, and an application thickness t1 of the grease G applied to the inner peripheral surface of the leading end portion 23b in the end face lip 23 is set to be smaller than an application thickness t2 of the grease G applied to the inner peripheral surface of the root portion 23a in the end face lip 23 (t1 < t2). Further, the application thickness of the grease G is set to be enlarged little by little from the lip leading end portion 23b toward the lip root portion 23a, and is on the contrary set to become smaller little by little from the lip root portion 23a toward the lip leading end portion 23b.

In the sealing device 1 having the structure mentioned above, the grease G is set to be applied to the inner peripheral surface of the leading end portion 23b in the end face lip 23 at the comparatively small amount and be applied to the inner peripheral surface of the root portion 23a in the end face lip 23 at the comparatively large amount, and the application thickness t1 of the grease G applied to the inner peripheral surface of the leading end portion 23b in the end face lip 23 is set to be smaller than the application thickness t2 of the grease G applied to the inner peripheral surface of the root portion 23a in the end face lip 23. As a result, in correspondence to the application thickness t1 of the grease G applied to the inner peripheral surface of the lip leading end portion 23b in the former, a contact width w2 of the applied grease with the end face portion 33 of the shaft 32 is set to be much smaller in comparison with a contact width w1 in the prior art shown in Fig. 7 mentioned above (w1 > w2). Even in the case that the centrifugal force is generated in conjunction with the rotation of the shaft 32 under the structure mentioned above, the centrifugal force is hard to affect the grease G. As a result, it is possible to inhibit the grease G from passing through the sliding portion of the end face lip 23 and being scattered toward an outer peripheral side thereof.

### Modified embodiment of first embodiment

As mentioned above, the present invention is characterized in that the application amount of the grease G applied to the inner peripheral surface of the lip leading end portion 23b in the end face lip 23 is set to be smaller than the application amount of the grease G applied to the inner peripheral surface of the root portion 23a in the end face lip 23. In order to realize this, in the first embodiment mentioned above, the grease G is applied over the whole periphery of the inner peripheral surface in the end face lip 23, and the application thickness t1 of the grease G applied to the inner peripheral surface of the leading end portion 23b in the end face lip 23 is set to be smaller than the application thickness t2 of the grease G applied to the inner peripheral surface of the root portion 23a in the end face lip 23 (t1 < t2). However, the grease G may be applied to a part of a circumference of the inner peripheral surface of the end face lip 23. A description will be given below of an example in this case.

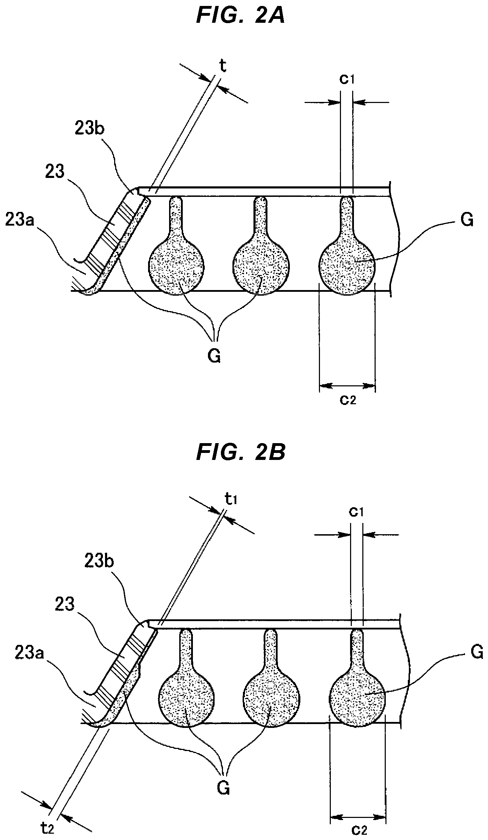

More specifically, in the example shown in Fig. 2A, the grease G is applied to a plurality of positions in a part of the circumference of the inner peripheral surface of the end face lip 23, and an application width c1 in a circumferential direction of the grease G applied to the inner peripheral surface of the leading end portion 23b in the end face lip 23 is set to be smaller than an application width c2 in a circumferential direction of the grease G applied to the inner peripheral surface of the root portion 23a in the end face lip 23 (c1 < c2). The application thickness t of the grease is set to be fixed or approximately fixed.

Further, in an example shown in Fig. 2B, the grease G is applied to a plurality of positions in a part of the circumference of the inner peripheral surface of the end face lip 23, and the application width c1 in the circumferential direction of the grease G applied to the inner peripheral surface of the leading end portion 23b in the end face lip 23 is set to be smaller than the application width c2 in the circumferential direction of the grease G applied to the inner peripheral surface of the root portion 23a in the end face lip 23 (c1 < c2). In addition, the application thickness t1 of the grease G applied to the inner peripheral surface of the leading end portion 23b in the end face lip 23 is set to be smaller than the application thickness t2 of the grease G applied to the inner peripheral surface of the root portion 23a in the end face lip 23 (t1 < t2).

In these structures, it is possible to provide the sealing device having the structure in which the grease G applied to the inner peripheral surface of the end face lip 23 is hard to be scattered.

### Second embodiment

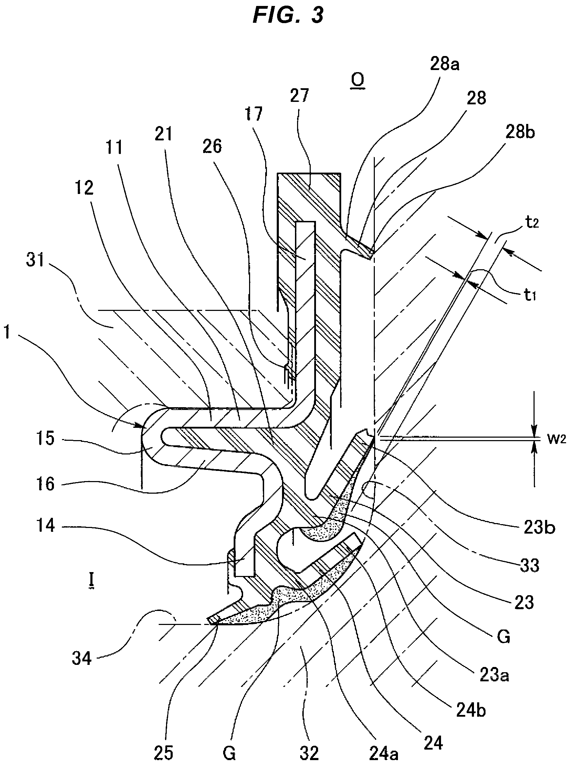

Fig. 3 shows a cross section of a substantial part of a sealing device 1 according to a second embodiment of the present invention. The sealing device 1 according to the embodiment is used as a hub bearing seal (a hub seal) in a bearing portion in a wheel suspension device for a motor vehicle, and is structured as follows.

More specifically, the sealing device is provided with a mounting ring 11 which is fixed to an inner peripheral surface of a housing 31 such as a bearing outer ring corresponding to a stationary side mounting part in the bearing portion and is made of a rigid material such as a metal, and a rubber-like elastic body 21 made of a predetermined rubber material is attached (crosslinking bonded) to the mounting ring 11.

The mounting ring 11 has a tubular portion 12 which is fitted and attached to an inner peripheral surface of the housing 31, and a radially inward flange portion 14 is integrally formed in an end portion in one side (a left side in the drawing) in an axial direction of the tubular portion 12 via a bent portion 15 and an inner peripheral tube portion 16. Further, a radially outward flange portion 17 is integrally formed in an end portion in the other side (a right side in the drawing) in the axial direction of the tubular portion 12.

The rubber-like elastic body 21 is attached to the tubular portion 12, the bent portion 15, the inner peripheral portion 16 and both the flange portions 14 and 17 in the mounting ring 11, and an end face seal portion 26, an outer peripheral cover portion 27, an end face lip (a side lip) 23, a second end face lip (a second side lip) 24 and a radial lip (a grease lip) 25 are integrally formed by the rubber-like elastic body 21. The end face seal portion 26 comes into contact with an end face portion of the housing 31 in a stationary manner. The outer peripheral cover portion 27 covers the outward flange portion 17 of the mounting ring 11. The end face lip 23 slidably comes into contact with an end face portion (an end face portion in an axial direction) 33 of a shaft 32 such as a bearing inner ring corresponding to a rotation side part in the bearing portion. The second end face lip 24 slidably comes into contact with the end face portion 33 of the shaft 32 in the same manner in an inner peripheral side of the end face lip 23. The radial lip 25 slidably comes into contact with an outer peripheral surface portion 34 of the shaft 32 in a bearing inner portion (a machine inner side) I side of the second end face lip 24. A round portion having a circular arc cross sectional shape is included in the end face portion 33 as shown in the drawing.

The end face lip 23 and the second end face lip 24 are respectively formed so that diameters thereof are enlarged little by little from the lip root portions 23a and 24a toward the lip leading end portions 23b and 24b, are provided with the lip leading end portions 23b and 24b so as to be directed to an outer peripheral side, and mainly exert a sealing function so as to prevent a foreign material such as muddy water in a bearing outer portion (a machine outer side) O from entering into the machine inner side I on the basis of the lip leading end portions 23b and 24b slidably coming into contact with the end face portion 33 of the shaft 32.

Grease G constructed by fluid having a viscosity is applied to each of inner peripheral surfaces of the lips 23, 24 and 25, for enhancing a muddy water resistance of the lips 23, 24 and 25 and further enhancing a sliding resistance thereof.

Among them, the grease G applied to the inner peripheral surface of the end face lip 23 is set to be applied to an inner peripheral surface of a leading end portion 23b in the end face lip 23 at a comparatively small amount and be applied to an inner peripheral surface of a root portion 23a in the end face lip 23 at a comparatively large amount. More specifically, the grease G is applied over a whole periphery of the inner peripheral surface of the end face lip 23, and an application thickness t1 of the grease G applied to the inner peripheral surface of the leading end portion 23b in the end face lip 23 is set to be smaller than an application thickness t2 of the grease G applied to the inner peripheral surface of the root portion 23a in the end face lip 23 (t1 < t2). Further, the application thickness of the grease G is set to be enlarged little by little from the lip leading end portion 23b toward the lip root portion 23a, and is on the contrary set to become smaller little by little from the lip root portion 23a toward the lip leading end portion 23b.

Further, grease trap 28 is provided so as to be positioned in an outer peripheral side of the end face lip 23.

The grease trap 28 is formed into an annular shape and a lip shape, and is formed into such a shape that an inner diameter thereof is decreased little by little from a trap root portion 28a toward a trap leading end portion 28b of the grease trap 28. Further, the grease trap 28 is integrally formed with the outer peripheral cover portion 27 by the rubber-like elastic body 21, and slidably comes into contact with the end face portion 33 of the shaft 32 with the leading end portion 28b thereof.

In the sealing device 1 having the structure mentioned above, the grease G is set to be applied to the inner peripheral surface of the leading end portion 23b in the end face lip 23 at the comparatively small amount and be applied to the inner peripheral surface of the root portion 23a in the end face lip 23 at the comparatively large amount, and the application thickness t1 of the grease G applied to the inner peripheral surface of the leading end portion 23b in the end face lip 23 is set to be smaller than the application thickness t2 of the grease G applied to the inner peripheral surface of the root portion 23a in the end face lip 23. As a result, in correspondence to the application thickness t1 of the grease G applied to the inner peripheral surface of the lip leading end portion 23b in the former, a contact width w2 of the applied grease with the end face portion 33 of the shaft 32 is set to be much smaller in comparison with a contact width w1 in the prior art shown in Fig. 7 mentioned above (w1 > w2). Even in the case that the centrifugal force is generated in conjunction with the rotation of the shaft 32 under the structure mentioned above, the centrifugal force is hard to affect the grease G. As a result, it is possible to inhibit the grease G from passing through the sliding portion of the end face lip 23 and being scattered toward an outer peripheral side thereof.

Further, since the grease trap 28 is previously provided in the outer peripheral side of the end face lip 23 in preparation for the case that the grease G passes through the sliding portion of the end face lip 23, the grease trap 28 can collect the grease G. Therefore, it is possible to inhibit the grease G from being scattered toward the outer peripheral side from the sealing device 1.

The grease trap 28 is formed into the annular shape and the lip shape, and is formed into such the shape that the inner diameter is decreased little by little from the trap root portion 28a toward the trap leading end portion 28b of the grease trap 28. Therefore, the collected grease G flows along an inner peripheral surface of the grease trap 28 from the trap leading end portion 28b side toward the trap root portion 28a side and is hard to flow out of the trap leading end portion 28b. As a result, an effect of collecting the grease is high.

In the first and second embodiments, the end face lip 23 is structured such that the end face lip 23 slidably comes into contact with the end face portion (the end portion in the axial direction) 33 of the flange portion which is provided in the shaft 32 such as the bearing inner ring corresponding to the other end of sliding, however, the other end of sliding may be set to the other part than the flange portion provided in the shaft 32, for example, may be set to a metal ring which is mounted to an outer peripheral surface of the shaft 32. A description will be given below of an example in this case.

### Third embodiment

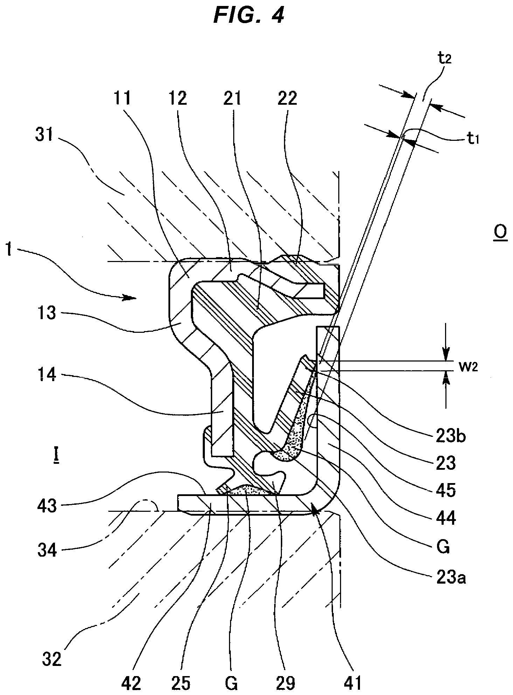

Fig. 4 shows a cross section of a substantial part of a sealing device 1 according to a third embodiment of the present invention. The sealing device 1 according to the embodiment is used as a hub bearing seal (a hub seal) in a bearing portion in a wheel suspension device for a motor vehicle, and is combined with a metal ring 41 which is mounted to an outer peripheral surface of the shaft 32.

The metal ring 41 has a tubular portion 42 which is fitted to the outer peripheral surface of the shaft 32, and a radially outward flange portion 44 is integrally formed in an end portion in one side (a bearing outer portion (a machine outer side) O, a right side in the drawing) in an axial direction of the tubular portion 42. This metal ring 41 is also called as a "slinger".

The sealing device is provided with a mounting ring 11 which is fixed to an inner peripheral surface of a housing 31 such as a bearing outer ring corresponding to a stationary side mounting part in the bearing portion and is made of a rigid material such as a metal, and a rubber-like elastic body 21 made of a predetermined rubber material is attached (crosslinking bonded) to the mounting ring 11.

The mounting ring 11 has a tubular portion 12 which is fitted and attached to an inner peripheral surface of the housing 31, and a radially inward flange portion 14 is integrally formed in an end portion in the other side (a bearing inner portion (a machine inner side) I, a left side in the drawing) in an axial direction of the tubular portion 12 via a bent portion 13.

The rubber-like elastic body 21 is attached to the tubular portion 12, the bent portion 13 and the flange portion 14 in the mounting ring 11, and an outer peripheral seal portion 22, an end face lip (a side lip) 23, a radial lip 29 and a radial lip (a grease lip) 25 are integrally formed by the rubber-like elastic body 21. The outer peripheral seal portion 22 comes into contact with an inner peripheral surface of the housing 31 in a stationary manner. The end face lip 23 slidably comes into contact with an end face portion (a machine inner side end face portion) 45 of the flange portion 44 in the metal ring 41. The radial lip 29 slidably comes into contact with the outer peripheral surface portion 43 of the tubular portion 42 in the metal ring 41 in an inner peripheral side of the end face lip 23. The radial lip 25 slidably comes into contact with an outer peripheral surface portion 43 of the tubular portion 42 in the metal ring 41 in the same manner in a machine inner side of the radial lip 29.

The end face lip 23 is formed so that a diameter thereof is enlarged little by little from a lip root portion 23a toward lip leading end portion 23b, is provided with the lip leading end portion 23b so as to be directed to an outer peripheral side, and mainly exerts a sealing function so as to prevent a foreign material such as muddy water in a bearing outer portion (a machine outer side) O from entering into the machine inner side I on the basis of the lip leading end portion 23b slidably coming into contact with the end face portion (the machine inner side end face portion) 45 of the flange portion 44 in the metal ring 41.

Grease G constructed by fluid having viscosity is applied to each of the inner peripheral surfaces of the lips 23, 25 and 29, for enhancing a muddy water resistance of the lips 23, 25 and 29 and further enhancing a sliding resistance thereof.

Among them, the grease G applied to the inner peripheral surface of the end face lip 23 is set to be applied to an inner peripheral surface of a leading end portion 23b in the end face lip 23 at a comparatively small amount and be applied to an inner peripheral surface of a root portion 23a in the end face lip 23 at a comparatively large amount. More specifically, the grease G is applied over a whole periphery of the inner peripheral surface of the end face lip 23, and an application thickness t1 of the grease G applied to the inner peripheral surface of the leading end portion 23b in the end face lip 23 is set to be smaller than an application thickness t2 of the grease G applied to the inner peripheral surface of the root portion 23a in the end face lip 23 (t1 < t2). Further, the application thickness of the grease G is set to be enlarged little by little from the lip leading end portion 23b toward the lip root portion 23a, and is on the contrary set to become smaller little by little from the lip root portion 23a toward the lip leading end portion 23b.

In the sealing device 1 having the structure mentioned above, the grease G is set to be applied to the inner peripheral surface of the leading end portion 23b in the end face lip at the comparatively small amount and be applied to the inner peripheral surface of the root portion 23a in the end face lip 23 at the comparatively large amount, and the application thickness t1 of the grease G applied to the inner peripheral surface of the leading end portion 23b in the end face lip 23 is set to be smaller than the application thickness t2 of the grease G applied to the inner peripheral surface of the root portion 23a in the end face lip 23. As a result, in correspondence to the application thickness t1 of the grease G applied to the inner peripheral surface of the lip leading end portion 23b in the former, a contact width w2 of the applied grease with the end face portion 33 of the shaft 32 is set to be much smaller in comparison with a contact width w1 in the prior art shown in Fig. 7 mentioned above (w1 > w2). Even in the case that the centrifugal force is generated in conjunction with the rotation of the shaft 32 under the structure mentioned above, the centrifugal force is hard to affect the grease G. As a result, it is possible to inhibit the grease G from passing through the sliding portion of the end face lip 23 and being scattered toward an outer peripheral side thereof.

The grease G may be applied to the part of the circumference of the inner peripheral surface of the end face lip 23 as mentioned above.

### Fourth embodiment

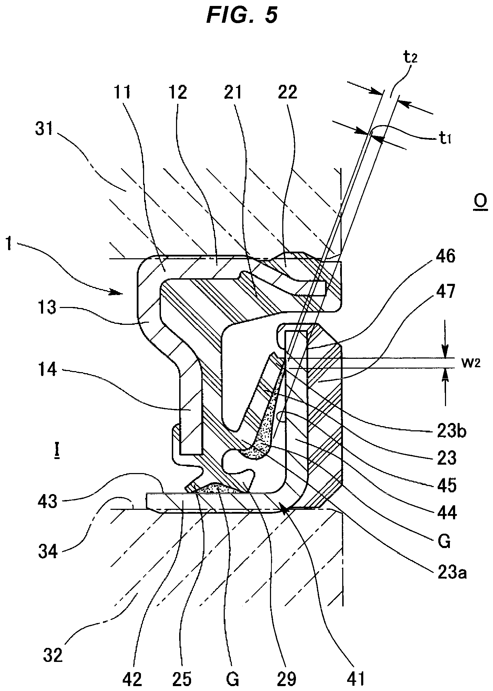

Further, as shown in Fig. 5 as a fourth embodiment, the metal ring 41 may be a metal ring 41 with a magnetic encoder 47.

The magnetic encoder 47 is formed into an annular shape with a predetermined rubber-like elastic material obtained by mixing a magnetic powder, and is structured such that a lot of N poles and S poles are alternately magnetized circumferentially at predetermined pitches to form a circumferential magnetic pattern. The magnetic encoder 47 senses a speed of rotation and an angle of rotation of an axis by being combined with a magnetic sensor (not shown).

In the embodiment, the magnetic encoder 47 as mentioned above is attached (crosslinking bonded) to an end face portion 46 in a machine outer side of the flange portion 44 in the metal ring 41, and is structured such that the end face lip 23 slidably comes into contact with an end face portion 45 in a machine inner side of the flange portion 44.

In the fourth embodiment, the other structures and operational effects are the same as the third embodiment mentioned above. Therefore, a description thereof will be omitted by attaching the same reference numerals.

### Other structures

The sealing device 1 according to the second embodiment (Fig. 3) is the sealing device 1 sealing the foreign material in the machine outer side O so as to prevent the foreign material from entering into the machine inner side I, in which the sealing device has the end face lips 23 and 24 slidably coming into contact with the end face portion 33 of the rotation side part (the shaft) 32, and applies the lubricating grease G to the inner peripheral surfaces of the end face lips 23 and 24. The sealing device is characterized by the following points:
(A) the application amount of the grease G applied to the inner peripheral surfaces of the leading end portions 23b and 24b in the end face lips 23 and 24 is set to be smaller than the application amount of the grease G applied to the inner peripheral surfaces of the root portions 23a and 24a in the end face lips 23 and 24; and
(B) the grease trap 28 is provided in the outer peripheral side of the end face lips 23 and 24.

The structure (B) can exert the effect of suppressing the scattering of the grease G by itself. Therefore, the invention in this case can be defined by the following structure.

### (B-1)

A sealing device sealing a foreign material in a machine outer side so as to prevent the foreign material from entering into a machine inner side, having an end face lip which slidably comes into contact with an end face portion of a rotation side part, and applying grease for lubrication to an inner peripheral surface of the end face lip, wherein grease trap is provided in an outer peripheral side of the end face lip.

### (B-2)

The sealing device described in the item (B-1) mentioned above, wherein the grease trap is formed into a lip shape, and an inner diameter of the grease trap is formed into such a shape that is decreased little by little from a root portion toward a leading end portion of the grease trap.

### (B-3)

The sealing device described in the item (B-1) or (B-2) mentioned above, wherein the sealing device is used as a hub bearing seal for a vehicle such as a motor vehicle or the other bearing seals.

### Description of Reference Numerals

- 1: sealing device
- 11: mounting ring
- 12, 42: tubular portion
- 13, 15: bent portion
- 14, 17, 44: flange portion
- 16: inner peripheral tube portion
- 21: rubber-like elastic body
- 22: outer peripheral seal portion
- 23: end face lip
- 23a, 24a: lip root portion
- 23b, 24b: lip leading end portion
- 24: second end face lip
- 25: radial lip
- 26: end face seal portion
- 27: outer peripheral cover portion
- 28: grease trap
- 28a: trap root portion
- 28b: trap leading end portion
- 31: housing
- 32: shaft
- 33, 45, 46: end face portion
- 34, 43: outer peripheral surface portion
- 41: metal ring
- 47: magnetic encoder
- G: grease
- I: machine inner side
- O: machine outer side

## Claims

1. A sealing device sealing a foreign material in a machine outer side so as to prevent the foreign material from entering into a machine inner side, the sealing device comprising:
an end face lip which slidably comes into contact with an end face portion of a rotation side part;
the sealing device applying grease for lubrication to an inner peripheral surface of the end face lip; and
an application amount of the grease applied to an inner peripheral surface of a leading end portion in the end face lip being set to be smaller than an application amount of the grease applied to an inner peripheral surface of a root portion in the end face lip.

2. The sealing device according to claim 1, wherein the grease is applied over a whole peripheral of the inner peripheral surface in the end face lip, and
wherein an application thickness of the grease applied to the inner peripheral surface of the leading end portion in the end face is set to be smaller than an application thickness of the grease applied to the inner peripheral surface of the root portion in the end face lip.

3. The sealing device according to claim 1, wherein the grease is applied to a part of a circumference of the inner peripheral surface of the end face lip, and
wherein any one or both of an application thickness and an application width in a circumferential direction of the grease applied to the inner peripheral surface of the leading end portion in the end face lip is set to be smaller than an application thickness or an application width in a circumferential direction of the grease applied to the inner peripheral surface of the root portion in the end face lip.

4. The sealing device according to any one of claims 1 to 3, wherein a grease trap is provided in an outer peripheral side of the end face lip.

5. The sealing device according to any one of claims 1 to 4, wherein the sealing device is used as a hub bearing seal for a vehicle such as a motor vehicle or the other bearing seals.
